# EUROPEAN PATENT APPLICATION

(11) **EP 4 394 137 A1**
(43) Date of publication of application: **03.07.2024**
(21) Application number: 23220241.6
(22) Date of filing: 27.12.2023
(51) Int. Cl.: E02F 9/26, E02F 9/20

(54) **DISPLAY DEVICE FOR WORK MACHINE AND WORK MACHINE**

(30) Priority: 27.12.2022 JP 2022210287
(71) Applicant: Sumitomo Heavy Industries, Ltd., Tokyo 141-6025 (JP)
(72) Inventor: SATOH, Keisuke, Kanagawa, 237-8555 (JP); SHINATO, Ayano, Kanagawa, 237-8555 (JP); SHIBATA, Homare, Kanagawa, 237-8555 (JP)
(74) Representative: Louis Pöhlau Lohrentz

(57) **Abstract**

An appropriate operation is performed for a work machine. A position information acquisition unit (43) configured to acquire position information of a work machine (100), a peripheral information acquisition unit (31, 411) configured to acquire peripheral information indicating an existing structure, terrain, or a boundary of a zone around a position indicated by the position information of the work machine (100), an augmented image generation unit (32, 412) configured to generate an augmented image in which the existing structure, the terrain, or the boundary of a zone is viewed from a predetermined viewpoint (E1) of the work machine (100), and a display processing unit (33, 413) configured to display the augmented image (AR1, AR2) of the existing structure, the terrain, or the boundary of a zone while superimposing the augmented image (AR1, AR2) on a field of view from the predetermined viewpoint (E1) of the work machine (100) or on an image (R1, R2) of the field of view.

## Description

### BACKGROUND OF THE INVENTION

### Field of the Invention

The present invention relates to a display device for a work machine and a work machine.

### Description of Related Art

It is extremely important to operate a work machine including an excavator, a motor grader, or the like safely. Therefore, in recent years, using a display technique for an augmented reality (AR) has been proposed.

For example, in a case where a bucket of an excavator is moved to a position where the bucket is not visible in a field of view of a cabin, AR display of the bucket is performed on a display device, and position recognition of the bucket is assisted (for example, refer to U.S. Patent Application Publication No. 2014/0188333).

### SUMMARY OF THE INVENTION

However, in the above-described related art, a part of the work machine is displayed in an augmented manner, and thus, it is not possible to provide visual support in a case where an object around the work machine is blocked.

The present invention has been made in view of the above circumstances, and an object of the present invention is to appropriately operate the work machine in consideration of safety.

A display device for a work machine according to the present invention has a configuration in which the display device includes
a position information acquisition unit configured to acquire position information of a work machine,
a peripheral information acquisition unit configured to acquire peripheral information indicating an existing structure, terrain, or a boundary of a zone around a position indicated by the position information of the work machine,
an augmented image generation unit configured to generate an augmented image in which the existing structure, the terrain, or the boundary of a zone is viewed from a predetermined viewpoint of the work machine, and
a display processing unit configured to display the augmented image of the existing structure, the terrain, or the boundary of a zone while superimposing the augmented image on a field of view from the predetermined viewpoint of the work machine or on an image of the field of view.

A work machine according to the present invention has a configuration in which the work machine includes the display device for a work machine according to the above configuration.

According to the present invention, it is possible to operate the work machine more appropriately.

### BRIEF DESCRIPTION OF THE DRAWINGS

Fig. 1 is a side view of an excavator according to the present embodiment.
Fig.2 is a block diagram showing a schematic configuration of the excavator.
Fig. 3 is an explanatory diagram showing a coordinate system of the excavator.
Fig. 4 is a diagram showing a display screen on which an augmented image is superimposed on a real image.
Fig. 5 is an explanatory diagram showing a concept of an augmented image in which an error occurs in a display position and processing of correcting the error performed by a correction unit.
Fig. 6 is an example of a display screen on which a real image and an augmented image that are converted into an overhead image by an overhead image generation unit are displayed.
Fig. 7 is a flowchart showing display processing related to an augmented image.
Fig. 8 is a diagram showing a display form in which an augmented image is projected onto a window glass of a front window of a cabin.
Fig. 9 is a block diagram showing a schematic configuration of a remote control system for an excavator.
Fig. 10 is an explanatory diagram showing a remote control coordinate system in a remote control device.

### DETAILED DESCRIPTION OF THE INVENTION

Hereinafter, an embodiment of the present invention will be described in detail with reference to the drawings.

In the present embodiment, an excavator as a work machine including a display device will be exemplified.

### [Configuration of Excavator]

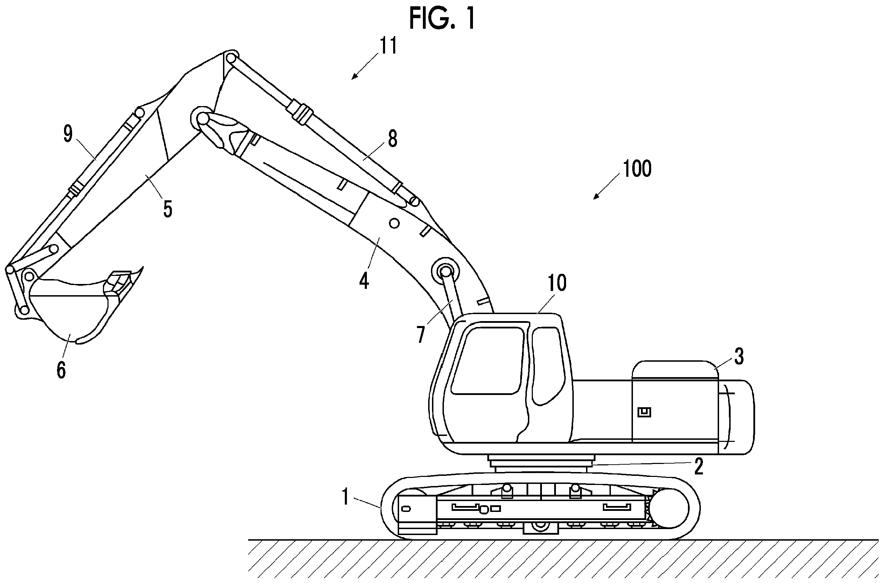

Fig. 1 is a side view of an excavator 100 according to the present embodiment.

As shown in this figure, the excavator 100 includes a lower traveling body 1; a rotating platform 3 that is turnably mounted on the lower traveling body 1 via a turning mechanism 2; a boom 4, an arm 5, and a bucket 6 as an attachment 11; and a cabin 10 as a driver's seat on which an operator boards. The attachment 11 is not limited thereto as long as a work element (for example, bucket, crusher, or crane device) is provided.

The lower traveling body 1 includes, for example, a pair of right and left crawlers, and each crawler is hydraulically driven by a traveling hydraulic motor (not shown) to cause the excavator 100 to travel.

The rotating platform 3 is driven by a turning hydraulic motor, an electric motor (both not shown), or the like to turn with respect to the lower traveling body 1.

The boom 4 is pivotally attached to a center of a front portion of the rotating platform 3 so as to be capable of being elevated, the arm 5 is pivotally attached to a tip of the boom 4 so as to be capable of rotating up and down, and the bucket 6 is pivotally attached to a tip of the arm 5 so as to be capable of rotating up and down. The boom 4, the arm 5, and the bucket 6 are hydraulically driven by a boom cylinder 7, an arm cylinder 8, and a bucket cylinder 9, respectively.

The cabin 10 is a cab that the operator boards, and is mounted on, for example, a left side of the front portion of the rotating platform 3. The excavator 100 causes an actuator to operate in response to a manipulation of the operator boarding the cabin 10 to drive driven elements such as the lower traveling body 1, the rotating platform 3, the boom 4, the arm 5, and the bucket 6.

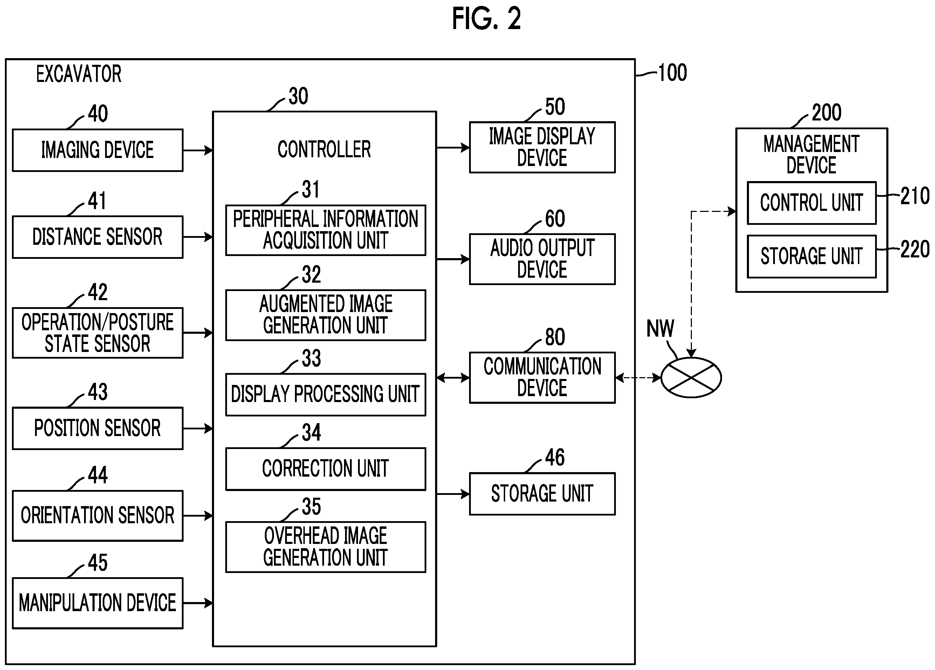

Fig. 2 is a block diagram showing a schematic configuration of the excavator 100.

As shown in the drawing, the excavator 100 is capable of communicating with a management device 200 through a network NW.

In addition to the above-described configuration, the excavator 100 includes an imaging device 40, a distance sensor 41, an operation/posture state sensor 42, a position sensor 43, an orientation sensor 44, a manipulation device 45, an image display device 50, an audio output device 60, a communication device 80, a controller 30, and a storage unit 46.

The imaging device 40 captures an image of the periphery of the excavator 100 and outputs the image to the controller 30. For example, the imaging device 40 includes a front camera for imaging a front side of the excavator 100, a rear camera for imaging a rear side thereof, a left camera for imaging a left side thereof, and a right camera for imaging a right side thereof. Each imaging device 40 is installed such that an optical axis faces obliquely downward, and has an imaging range (angle of field) in an up-down direction including a distance from the ground near the excavator 100 to a distant place of the excavator 100.

The distance sensor 41 is a distance measurement unit that measures a distance to an object near the excavator 100 and acquires information of the distance (two-dimensional or three-dimensional distance information), and outputs the acquired information to the controller 30. For example, the distance sensor 41 is provided such that four sides of the front side, rear side, the right side, and the left side of the excavator 100 can be measured in correspondence with the imaging device 40.

The operation/posture state sensor 42 is a sensor that detects an operation state or a posture state of the excavator 100, and outputs a detection result to the controller 30. The operation/posture state sensor 42 includes a boom angle sensor, an arm angle sensor, a bucket angle sensor, a triaxial inertial measurement unit (IMU), a turning angle sensor, and an acceleration sensor.

These sensors may be configured of a stroke sensor for a cylinder such as a boom, or a sensor such as a rotary encoder for acquiring rotation information, or may be replaced by acceleration (which may include speed and position) acquired by the IMU.

The boom angle sensor detects a rotation angle of the boom 4 (hereinafter, referred to as a "boom angle") with reference to a predetermined angle with respect to the rotating platform 3.

The arm angle sensor detects a rotation angle of the arm 5 (hereinafter referred to as "arm angle") with respect to the boom 4.

The bucket angle sensor detects a rotation angle of the bucket 6 (hereinafter referred to as "bucket angle") with respect to the arm 5.

The IMU is attached to each of the boom 4 and the arm 5, and to the rotating platform 3 (a location other than the attachment 11). The IMU detects the acceleration of the boom 4, the arm 5, and the rotating platform 3 along predetermined three axes and angular acceleration of the boom 4, the arm 5, and the rotating platform 3 around the predetermined three axes. In addition, the IMU provided in the rotating platform 3 detects an inclination angle of the rotating platform 3 with respect to an absolute horizontal plane.

The turning angle sensor detects a turning angle with respect to a predetermined angular direction of the rotating platform 3. However, the present invention is not limited thereto, and the turning angle may be detected based on a GPS or an IMU sensor provided in the rotating platform 3.

The acceleration sensor is attached to a position away from a turning axis of the rotating platform 3 to detect the acceleration of the rotating platform 3 at that position. Accordingly, whether the rotating platform 3 turns, whether the lower traveling body 1 travels, or the like can be determined based on a detection result of the acceleration sensor.

The position sensor 43 functions as a position information acquisition unit that acquires position information of the work machine, and is equipped on, for example, the rotating platform 3.

The position sensor 43 is a sensor that acquires information on a position (current position) of the excavator 100, and is a Global Navigation Satellite System (GNSS) receiver in the present embodiment. The position sensor 43 receives a signal including the information on the position of the excavator 100 from a GNSS satellite, and outputs the acquired position information of the excavator 100 to the controller 30. The position sensor 43 may not be the GNSS receiver as long as the position information of the excavator 100 can be acquired, and may be, for example, a sensor that uses a satellite positioning system other than the GNSS. Further, the position sensor 43 may be provided on the lower traveling body 1.

The orientation sensor 44 is a sensor that is provided on the rotating platform 3 and acquires information on an orientation (direction) in which the rotating platform 3 faces, and is, for example, a geomagnetic sensor. The orientation sensor 44 acquires the orientation information of the rotating platform 3 and outputs the orientation information to the controller 30. The orientation sensor 44 need only be capable of acquiring the orientation information of the rotating platform 3, and a sensor type thereof or the like is not particularly limited. For example, two GNSS receivers may be provided, and the orientation information may be acquired from a difference in pieces of position information of the two GNSS receivers.

The manipulation device 45 is a manipulation unit which is provided near the cab seat of the cabin 10 and by which the operator manipulates each operating element (lower traveling body 1, rotating platform 3, boom 4, arm 5, bucket 6, and the like). In other words, the manipulation device 45 is the manipulation unit that manipulates each hydraulic actuator that drives each operating element. The manipulation device 45 includes, for example, a lever or a pedal, and various buttons, and outputs, to the controller 30, a manipulation signal according to manipulation content thereof.

Further, the manipulation device 45 is also a manipulation unit that manipulates the imaging device 40, the distance sensor 41, the operation/posture state sensor 42, the position sensor 43, the image display device 50, the audio output device 60, the communication device 80, and the like, and outputs a manipulation command for each of these parts to the controller 30.

The image display device 50 is provided around the cab seat in the cabin 10, and displays various types of image information to be notified to the operator under the control of the controller 30. The image display device 50 is, for example, a liquid crystal display or an organic electroluminescence (EL) display, and may be a touch-panel type that also serves as at least a part of the manipulation device 45.

In addition, the image display device 50 functions as an image display device that displays a captured image captured by the imaging device 40, an image processed from the captured image, and further, an augmented image to be described later.

The audio output device 60 is provided around the cab seat in the cabin 10, and outputs various types of audio information to be notified to the operator under the control of the controller 30. The audio output device 60 is, for example, a speaker or a buzzer.

The storage unit 46 is a storage unit such as a nonvolatile memory, a hard disk drive (HDD), or a solid state drive (SSD) that stores information such as various types of data in a writable and readable manner.

The communication device 80 is a communication device that transmits and receives various types of information to and from the management device 200, which is a remote external device, another excavator 100, or the like through the predetermined communication network NW, based on a predetermined wireless communication standard. The communication network NW may include, for example, a mobile communication network with a base station as a terminal, a satellite communication network that uses a communication satellite in the sky, a short-range communication network that conforms to a protocol such as Wi-Fi or Bluetooth (registered trademark), and an Internet communication network.

The controller 30 is a control device that controls the operation of each part of the excavator 100 to control the drive of the excavator 100. The controller 30 is mounted inside the cabin 10. The function of the controller 30 may be realized by any hardware, software, or a combination thereof. For example, the controller 30 is mainly configured of a microcomputer including a CPU, a RAM, a ROM, an I/O, and the like. In addition to these, the controller 30 may be configured to include, for example, an FPGA or an ASIC.

Further, the controller 30 includes a storage area defined in an internal memory such as an electrically erasable programmable read-only memory (EEPROM).

The storage area stores various programs, various types of data, or the like, which includes image processing, for operating each part of the excavator 100, and also functions as a work area of the controller 30.

Further, the controller 30 of the excavator 100 can mutually communicate with an external management device 200 through the predetermined communication network NW. The controller 30 can acquire peripheral information to be described later from the management device 200 through communication. The controller 30 saves the acquired peripheral information in the above-described storage area.

In addition, as shown in Fig. 2, the controller 30 includes a peripheral information acquisition unit 31, an augmented image generation unit 32, a display processing unit 33, a correction unit 34, and an overhead image generation unit 35 as functional blocks. These functional configurations are realized by the controller 30 executing various programs, but may be realized by hardware.

Details of the content of the function of each of the functional configurations will be described later.

The display device for a work machine as the present embodiment is configured by the position sensor 43, the peripheral information acquisition unit 31, the augmented image generation unit 32, the display processing unit 33, the correction unit 34, and the overhead image generation unit 35 of the excavator 100 and the image display device 50 described above.

### [Regarding Management Device and Peripheral Information]

The management device 200 (an example of an information processing device) is disposed at a position geographically away from the excavator 100. The management device 200 is, for example, a server device that is installed in a management center or the like provided outside a work site where the excavator 100 works and is mainly configured of one or a plurality of server computers or the like. In this case, the server device may be an in-house server operated by a business operator or a related business operator related to the business operator that operates a system constructed by the excavator(s) 100 as well, or may be a rental server. Further, the server device may be a so-called cloud server. Further, the management device 200 may be a server device (so-called edge server) disposed in a management office or the like in the work site of the excavator 100, or may be a stationary or portable general-purpose computer terminal.

Further, as described above, the management device 200 can mutually communicate with the excavator 100 through the communication network NW. Accordingly, the management device 200 can receive and store (accumulate) various types of information uploaded from the excavator 100.

The management device 200 includes a control unit 210 and a storage unit 220. The control unit 210 expands a program stored in advance in the storage unit 220, and executes various types of processing in cooperation with the expanded program. For example, when the control unit 210 receives the position information of the work machine from the controller 30 of the excavator 100, the control unit 210 transmits the peripheral information around the position indicated by the position information to the controller 30.

The storage unit 220 stores a program for providing the above peripheral information to the excavator 100 and data including peripheral information of each place, and also functions as a work area of the control unit 210.

The peripheral information prepared by the storage unit 220 is information indicating an existing structure, terrain, or a boundary of a zone in each district within a range identified by the management device 200.

As the existing structure, any structure that may be present on the ground or underground at a location where the excavator 100 (work vehicle) may pass or enter or at a location where work is performed is included. For example, the following can be given: a curb provided on both sides of a road, an underground buried object (a water pipe, a sewer pipe, a gas pipe, an underground cable pipe, or the like), a guardrail, a road sign, a pedestrian crossing, an electric pole, a transmission tower, and the like.

The terrain is terrain of a location where the excavator 100 (work vehicle) can pass or enter or a location where work is performed. For example, a slope, an inclined surface, a cliff, an embankment, a waterway, a river, a lake, a farm, a forest, and the like can be given.

The boundary of a zone includes a boundary of a zone based on some setting at a location where the excavator 100 (work vehicle) can pass or enter or at a location where work is performed. For example, the boundary is a boundary between a road and land other than the road, a boundary according to a type of land, a boundary according to the type of the above-mentioned terrain, a boundary between a road and a facility, a boundary between facilities, a boundary between lands having different ownerships, and the like.

For example, the peripheral information includes information indicating the position of the origin (for example, latitude, longitude, and height) and a coordinate value of peripheral Information of each position along an outer periphery of the existing structure, terrain, or the boundary of a zone (hereinafter, referred to as "default structure or the like") represented in a three-dimensional coordinate system based on the origin (referred to as a "peripheral Information coordinate system"). In a case where the outer periphery of an existing structure or the like can be approximated by a straight line or a curve, the peripheral Information may be a function indicating a straight line or a curve in the peripheral information coordinate system.

In addition, each of the coordinate axes of the peripheral information coordinate system may be parallel to each of an east-west direction, a north-south direction, and a vertical up-down direction to facilitate identification of a direction (orientation) of an existing structure or the like.

In addition, the peripheral information may be a position information of a two-dimensional coordinate system representing a part or all of the existing structure, the terrain, or the boundary of a zone in a plan view. In that case, both of the two axes perpendicular to each other may be horizontal axes, and may be parallel to, for example, an east-west direction and a north-south direction.

Further, among the existing structures, the terrain, or the boundary of a zone, three-dimensional one may be shown in the three-dimensional coordinate system, and two-dimensional one may be shown in the two-dimensional coordinates.

### [Peripheral Information Acquisition Unit]

Next, the contents of the functions of each of the functional configurations of the controller 30 described above will be described in detail.

The peripheral information acquisition unit 31 acquires current position information of the excavator 100 based on detection of the position sensor 43.

Further, the peripheral information acquisition unit 31 transmits the current position information of the excavator 100 to the management device 200 through the communication device 80. Then, the peripheral information around the current position of the excavator 100 replied from the management device 200 is acquired.

The peripheral information around the current position is the peripheral information in the peripheral information coordinate system including the origin within a distance range set in advance with respect to the current position.

The peripheral information acquisition unit 31 may be configured to acquire the peripheral information only when the operator inputs a request for acquisition of the peripheral information. In addition, the peripheral information acquisition unit 31 may be configured not to acquire the peripheral information from the management device 200. For example, a configuration in which the storage unit 46 store a plurality of pieces of peripheral information, and when the current position of the excavator 100 is detected by the position sensor 43, the peripheral information acquisition unit 31 reads the peripheral information corresponding to the current position may be adopted.

In addition, a configuration in which, when the position where the excavator 100 is planned to go is input from the manipulation device 45, the peripheral information acquisition unit 31 determines a route from the current position to a destination position, and acquires all the peripheral information of each position on the route from the management device 200 and prepares the peripheral information in the storage unit 46 may be adopted.

### [Augmented Image Generation Unit]

The augmented image generation unit 32 generates augmented image data for displaying an augmented image based on an image of the default structure or the like viewed from a predetermined viewpoint E1 with respect to the excavator 100, based on the peripheral information corresponding to the current position of the excavator 100 acquired by the peripheral information acquisition unit 31.

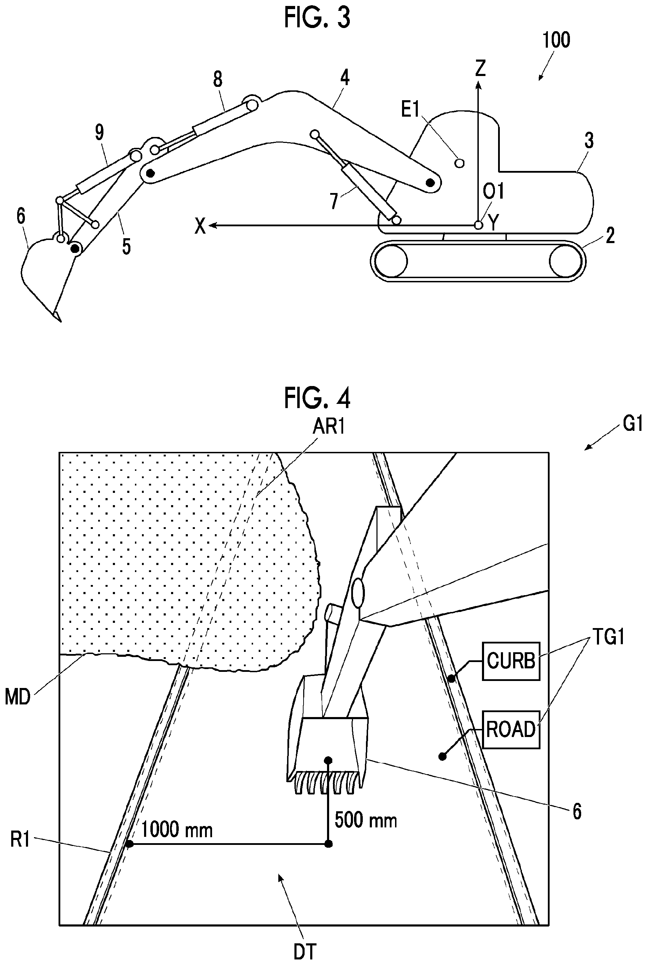

Here, a coordinate system of the excavator 100 will be described with reference to Fig. 3. Hereinafter, the coordinate system of the excavator 100 is referred to as an excavator coordinate system.

The excavator coordinate system is a three-dimensional XYZ perpendicular coordinate system having a reference point O1 on the rotating platform 3 as an origin, and includes an X-axis extending parallel to a front-rear direction of the rotating platform 3, a Y-axis extending parallel to a right-left direction of the rotating platform 3, and a Z-axis perpendicular to the X-axis and the Y-axis. In the example of Fig. 3, the origin O1 is on the turning axis of the rotating platform 3, and the height can be set to an any value. In the example of Fig. 3, when the excavator 100 is positioned on the horizontal plane, the X-axis and the Y-axis are horizontal, and the Z-axis is a vertical direction.

The predetermined viewpoint E1 is a position of eyes of the operator sitting in the cab seat of the cabin 10 of the excavator 100. Strictly speaking, the position is an intermediate position of the two eyes.

The viewpoint E1 may be determined at a fixed position that is an intermediate position between the two eyes in a state where a human having an average physique sits in the cab seat of the cabin 10 of the excavator 100 and faces forward.

In addition, the viewpoint E1 may detect the positions of the right and left eyes and obtain the intermediate point thereof by imaging with a camera or the like for an operator sitting in the cab seat of the cabin 10 of the excavator 100.

In a case where the camera is used, the position of the viewpoint E1 may be sequentially detected.

In addition, in a case where the viewpoint E1 is set as a fixed position, position coordinates in the excavator coordinate system may be stored in the storage unit 46 or the storage area of the controller 30.

The peripheral information includes position coordinates indicating an outer periphery of the default structure or the like in the peripheral information coordinate system. In addition, the peripheral information coordinate system is three-dimensional coordinates, and is individually set for each individual piece of peripheral information. The peripheral information includes information indicating an absolute position of an origin of the peripheral information coordinate system (latitude, longitude, altitude, and the like) and information indicating orientations of the three axes.

The augmented image generation unit 32 performs processing of converting a coordinate value indicating the outer periphery of the default structure or the like included in the peripheral information around the current position of the excavator 100 into a coordinate value in the excavator coordinate system.

The position coordinates in the excavator coordinate system of the position sensor 43 are obtained in advance by measurement and are stored in the storage unit 46. Further, the latitude, the longitude, and the altitude indicating the current position of the position sensor 43 can be detected by the position sensor 43.

Then, a tilt of the rotating platform 3 with respect to the absolute horizontal plane and the orientations of the X-axis and the Y-axis of the excavator coordinate system can be acquired by the operation/posture state sensor 42 and the orientation sensor 44.

Accordingly, the augmented image generation unit 32 can convert the coordinate value indicating the outer periphery of the default structure or the like in the peripheral information coordinate system into the position coordinates in the excavator coordinate system.

Furthermore, the augmented image generation unit 32 generates the augmented image data of the augmented image of the default structure or the like viewed from the viewpoint E1, based on the position coordinates of the outer periphery of the default structure or the like converted into the excavator coordinate system.

The augmented image is displayed on the image display device 50 while being superimposed on a real image of a field of view from the viewpoint E1 (an image based on imaging by the imaging device 40) generated by the display processing unit 33 to be described later. For this reason, the augmented image may be a semi-transparent image or a wire-frame image having a conspicuous color so that the augmented image is easily identified in the real image.

In addition, in a case where the peripheral information is the position coordinates in the two-dimensional coordinates indicating the structure or the like in a plan view, the peripheral Information may be converted into the excavator coordinate system to generate an augmented image projected onto the ground where the excavator 100 is currently located.

### [Display Processing Unit]

The display processing unit 33 displays the augmented image of the existing structure or the like generated by the augmented image generation unit 32 while superimposing the augmented image on the real image of the field of view of the excavator 100 from the viewpoint E1 on the image display device 50.

The display processing unit 33 generates real image data of the field of view from the viewpoint E1. The real image data is generated by processing of converting the captured image data captured by the front camera of the imaging device 40 into the captured image data viewed from the viewpoint E1.

In a case where the real image of the field of view from the viewpoint E1 is displayed over a wider range, the captured image data of not only the front camera but also the left camera and the right camera may be used. In that case, the captured image data of the left camera and the right camera is converted into the captured image data from the viewpoint E1, and is synthesized with the converted captured image data of the front camera to generate one real image data.

The display processing unit 33 sequentially generates the real image data and executes processing of displaying the augmented image of the augmented image data generated by the augmented image generation unit 32 on the image display device 50 while superimposing the augmented image on the real image.

Fig. 4 is an example of a display screen G1 in which an augmented image AR1 displayed by the display processing unit 33 on the image display device 50 is superimposed on a real image R1. In Fig. 4, a display screen G1 that displays the augmented image AR1 with a wire frame composed of a dotted line is exemplified.

On the display screen G1, the curb provided on both sides of the road is displayed as the augmented image AR1 as the default structure.

The existing structure, terrain, or the boundary of a zone may not be visually recognizable in a blocked state or the like due to an environmental change in the ground or the road surface caused by an external factor, for example, falling rocks, a landslide, snow accumulation, or destruction caused by an accident. In addition, there is a case where visual recognizability is lowered because of rain, submergence, or other factors such as aging deterioration.

The curb, the existing structure, also corresponds to the above example.

The display screen G1 of Fig. 4 shows a state where a part of the curb is covered with soil and sand MD and is not visually recognizable. In this way, even in a case where a part of the curb is blocked and is not visually recognizable in the real image, the augmented image AR1 of the curb is displayed while being superimposed at the same position as the original curb, so that the curb can be visually recognized in a proper way.

In addition, the peripheral information may include information indicating a name of each of the existing structure or a peripheral object.

In that case, the display processing unit 33 may read information on the name of each part of the existing structure or the like from the peripheral information, and may perform processing of displaying the name of each part as a part of the augmented image AR1. On the display screen G1 of Fig. 4, an example is shown in which the name is displayed in a form of a tag TG1.

In addition, in the display processing unit 33, a part of the excavator 100, such as the bucket 6, may be reflected within the display range of the real image. In such a case, processing of displaying distance information DT between the bucket 6 and the curb as a part of the augmented image AR1 may be performed.

On the display screen G1 of Fig. 4, as the distance information DT, a distance from the bucket 6 to the curb is displayed in numerical values in the up-down direction and the right-left direction, respectively. In addition, as the distance information DT, an up-down line indicating the distance in the up-down direction from the bucket 6 to the curb and a right-left line indicating the distance in the right-left direction from the bucket 6 to the curb are also displayed at the same time.

In this case, the display processing unit 33 calculates the position of the bucket 6 in the excavator coordinate system from detection output of the operation/posture state sensor 42. Further, the distance in the up-down direction and the distance in the right-left direction are respectively calculated from the position coordinates of the curb and the position coordinates of the bucket 6, which are converted into the excavator coordinate system. Then, the distance information DT is displayed as a part of the augmented image AR1 based on these calculation results.

### [Correction Unit]

The correction unit 34 performs, in a case where an error occurs at the display position of the augmented image AR1 because of some factor, processing of correcting the error and displaying the augmented image AR1.

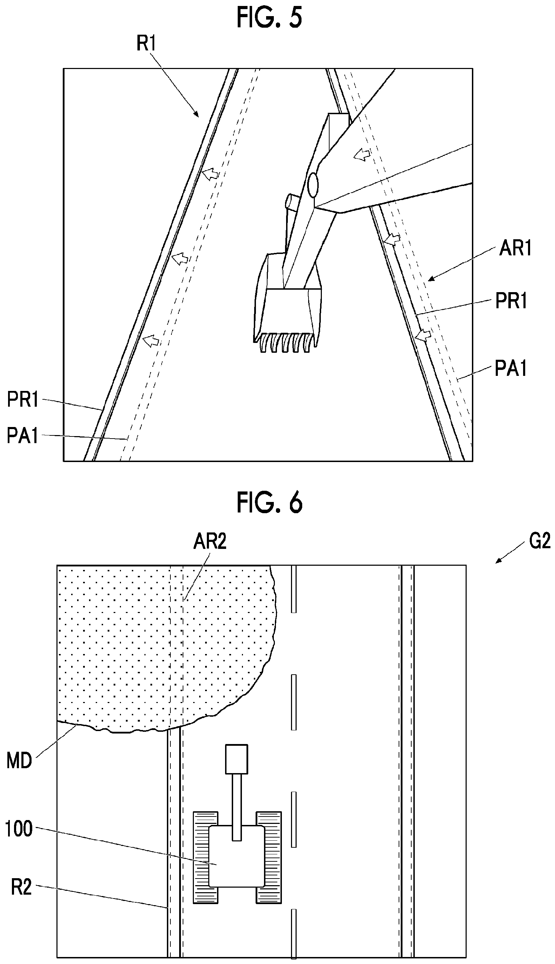

Fig. 5 is an explanatory diagram showing a concept of an augmented image AR1 in which an error occurs in the display position and of processing of correcting the error performed by the correction unit 34.

The correction unit 34 generates a contour shape pattern PA1 of the curb from the image data of the augmented image AR1 of the curb (the default structure or the like). Further, the correction unit 34 executes processing of searching for a pattern PR1 that is the same as or approximate to the contour shape pattern PA1 from the real image data of the field of view from the viewpoint E1 generated by the display processing unit 33.

Then, the correction unit 34 calculates a distance difference between the pattern PR1 detected in the real image data by the search and the contour shape pattern PA1 of the augmented image data.

Further, the correction unit 34 determines whether or not the distance difference exceeds a threshold set in advance. In a case where the threshold is exceeded, the correction unit 34 performs processing of correcting a position of the entire contour shape pattern PA1 to a position of the pattern PR1 (refer to a white arrow in Fig. 5) .

Accordingly, in the image display device 50, the augmented image AR1 can be displayed at an appropriate position in the real image.

In addition, the correction unit 34 determines that the contour shape pattern PA1 and the pattern PR1 are "the same or approximate" even in the case of partial matching in determining whether they are the same or approximate. For this reason, as shown in Fig. 4, even in a state where a part of the curb is blocked, it is possible to correct and display the curb of the augmented image AR1 at a correct position.

The above-described processing by the correction unit 34 can also be executed on the augmented image data after conversion into an overhead viewing image generated by the overhead image generation unit 35 to be described later and the real image data of an overhead viewing image.

### [Overhead Image Generation Unit]

The overhead image generation unit 35 performs processing of displaying a real image R2 of the periphery of the excavator 100 converted into an overhead image and the augmented image AR2 of the curb (existing structure or the like) generated by the augmented image generation unit 32 and converted into an overhead image on the image display device 50 while superimposing the augmented image AR2 on the real image R2.

Fig. 6 is an example of a display screen G2 on which the real image R2 and the augmented image AR2 which are converted into the overhead images by the overhead image generation unit 35 are displayed.

The display of the real image R2 and the augmented image AR2, which are converted into the overhead images by the overhead image generation unit 35, may be configured to be performed in a case where the operator inputs display switching from the manipulation device 45.

The overhead image generation unit 35 generates real image data for displaying the real image R2 of a field of view from a point at a predetermined height vertically above an origin O1 of the excavator coordinate system.

The overhead image generation unit 35 converts the captured image data obtained by the front camera, the left camera, the right camera, and the rear camera of the imaging device 40 into the captured image data viewed from the field of view from the point at the predetermined height vertically above.

Further, the converted captured image data of each of the cameras in four directions is synthesized to be integrated, and real image data of the overhead image is generated. In this case, depending on the disposition of each camera, there is a case where an overhead image of the excavator 100 itself cannot be obtained. In such a case, the overhead image of the excavator 100 prepared in advance or the overhead viewing icon may be fitted and synthesized.

Furthermore, the overhead image generation unit 35 performs processing of converting the augmented image data of the curb from the viewpoint E1 generated by the augmented image generation unit 32 into an image viewed from the field of view from the point at the predetermined height vertically above. Accordingly, the augmented image data of the curb converted into an overhead image is generated.

Then, the overhead image generation unit 35 displays an image obtained by superimposing the real image R2 converted from the real image data of the overhead image into the overhead image with the augmented image AR2 from the augmented image data of the overhead image on the image display device 50 while superimposing the augmented image AR2 on the real image R2.

The display screen G2 of Fig. 6 also shows a state where a part of the curb is covered with the soil and sand MD and is not visually recognizable. In this way, even in a case where a part of the curb is blocked and is not visually recognizable in the real image, the augmented image AR2 of the curb displays the position of the original curb, so that the curb can be properly recognized.

Furthermore, since the real image R2 and the augmented image AR2 are the overhead images, it is possible to easily identify a positional relationship between the excavator 100 and the curb hidden by the soil and sand MD around the excavator 100.

In addition, the overhead image generation unit 35 may be configured to acquire the real image data consisting of a wide range of a map image, an aerial photograph image, or the like including the current position of the excavator 100 as the real image data of the overhead image from the outside.

In that case, the overhead image generation unit 35 performs processing of fitting an icon indicating the current position of the excavator 100 into a wide range of a map image or an aerial photograph image and displaying the icon as the real image.

In addition, the overhead image generation unit 35 displays an overhead image of the existing structure or the like based on the peripheral information around the current position of the excavator 100 while superimposing the augmented image on the real image consisting of a wide range of a map image or an aerial photograph image.

### [Display Processing related to Augmented Image]

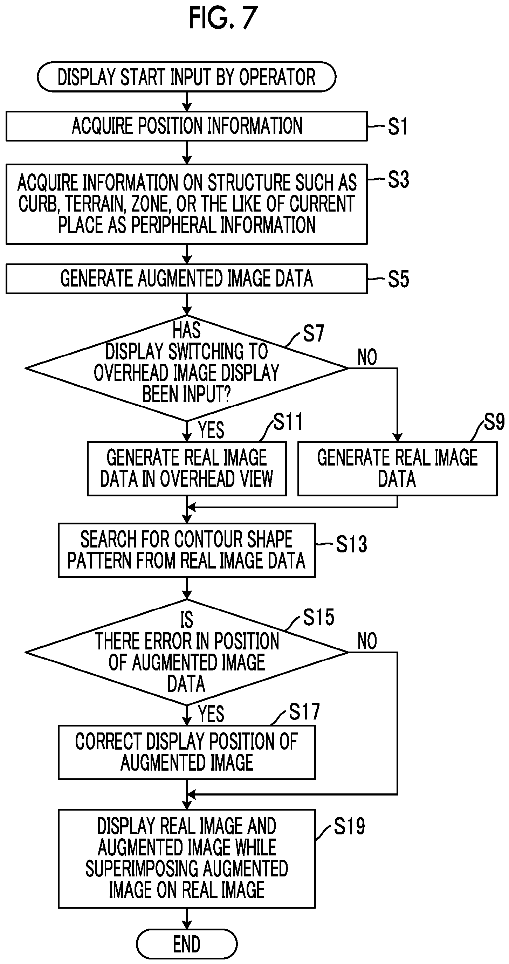

The display processing related to the augmented image executed by each of the above-described functional configurations of the controller 30 will be described with reference to a flowchart of Fig. 7.

In the present embodiment, a case where the display processing is started in a case where the operator inputs a request for starting the display processing from the manipulation device 45 will be described as an example. However, the start of the display processing is not limited thereto, and the display processing may be configured to be started together with the start of the manipulation of the excavator 100. In addition, a configuration in which the display processing is started together with another trigger, for example, the start of traveling or other manipulation may be adopted.

First, the peripheral information acquisition unit 31 acquires the current position information of the excavator 100 based on the detection of the position sensor 43 (step S1) .

Next, the peripheral information acquisition unit 31 transmits the current position information of the excavator 100 to the management device 200 through the communication device 80, and acquires the peripheral information around the current position from the management device 200 (step S3) .

Next, the augmented image generation unit 32 generates the augmented image data for displaying the augmented image of the default structure or the like, based on the peripheral information (step S5).

Next, the overhead image generation unit 35 determines whether or not display switching to overhead image display has been input from the manipulation device 45 by the operator (step S7).

In a case where the display switching to the overhead image display has not been input, the display processing unit 33 generates the real image data for displaying the real image of the field of view of the excavator 100 from the viewpoint E1 (step S9), and the processing proceeds to step S13.

In addition, in a case where the display switching to the overhead image display has been input, the overhead image generation unit 35 generates the real image data for displaying the real image in an overhead view (step S11).

In this case, the overhead image generation unit 35 executes processing of converting the augmented image of the augmented image data into an overhead viewing image.

Then, the processing proceeds to step S13.

In step S13, the correction unit 34 generates the contour shape pattern PA1 of the default structure or the like from the augmented image data (including the augmented image data after the conversion into the overhead viewing image) and searches for the pattern PR1 the same as or approximate to the contour shape pattern PA1 from the real image data (including the real image data of the overhead viewing image) (step S13).

Further, the correction unit 34 obtains the distance difference between the pattern PR1 detected in the real image data and the contour shape pattern PA1 of the augmented image data, and determines whether or not the distance difference exceeds a threshold that needs to be determined as an error (step S15).

As a result, in a case where the error is recognized to be present beyond the threshold, the correction unit 34 performs processing of correcting the display position of the augmented image to the position of the pattern PR1 (step S17: refer to Fig. 5).

In a case where the threshold is not exceeded or after the correction of the display position of the augmented image is completed, the display processing unit 33 displays the real image R1 or R2 of the field of view based on the real image data (including the real image data of the overhead viewing image) and the augmented image AR1 or AR2 of the default structure or the like based on the augmented image data (including the augmented image data after the conversion into the overhead viewing image) on the image display device 50 while superimposing the augmented image AR1 or AR2 on the real image R1 or R2 (step S19: refer to Fig. 4 or 6).

Then, the processing is ended.

The processing in the above steps S1 to S19 is repeatedly executed in a short cycle.

### [Technical Effects of Present Embodiment]

As described above, the display device for the excavator 100 (work machine) includes the display processing unit 33. Then, the display processing unit 33 displays the augmented image AR1 of the existing structure or the like while superimposing the augmented image AR1 on the real image R1 of the field of view from the viewpoint E1 on the image display device 50.

For this reason, even in a case where the existing structure or the like is in a state of poor visual recognizability or a state of being not visually recognizable because of some external factors such as environmental changes, the augmented image AR1 is displayed at an appropriate position in the real image R1.

Therefore, it is possible to recognize the existing structures or the like in a state of poor visual recognizability or in a state of being not visually recognizable, and by mounting the display device, it is possible to appropriately operate the excavator 100 in consideration of further safety.

In addition, the excavator 100 equipped with the display device can perform appropriate operation in consideration of further safety.

In particular, it is possible to prevent or suppress the occurrence of mutual destruction and damage caused by contact with the excavator 100 in the existing structure.

In addition, the display processing unit 33 performs processing of displaying the name of the existing structure or the like together with the augmented image AR1 of the existing structure or the like.

For this reason, it is possible to quickly recognize what the existing structure or the like existing within the field of view of the excavator 100 is.

In addition, the display processing unit 33 displays the augmented image AR1 on the image display device 50 while superimposing the augmented image AR1 on the real image R1.

Therefore, the operator of the excavator 100 can control the excavator 100 with the field of view from the cabin 10 and, as necessary, recognize the augmented image AR1 of the existing structure or the like from the image display device 50.

Therefore, in the excavator 100, it is possible to recognize an existing structure or the like while maintaining controllability of the related art, and it is possible to appropriately operate the excavator 100 in consideration of further safety.

In addition, since the excavator 100 includes the overhead image generation unit 35, the real image R2 and the augmented image AR2 consisting of the overhead images can be displayed on the image display device 50.

Accordingly, it is possible to easily identify the positional relationship between the excavator 100 and the existing structure or the like around the excavator 100. Further, even in a case where display control related to the augmented image is not visually recognizable or has poor visual recognizability, it is possible to easily identify the positional relationship between the display control related to the augmented image and the excavator 100.

### [Other Display Form of Augmented Image (1)]

In the display device of the above-described embodiment, a configuration in which an augmented image of the existing structure or the like is displayed on the image display device 50 has been exemplified, but the present invention is not limited thereto.

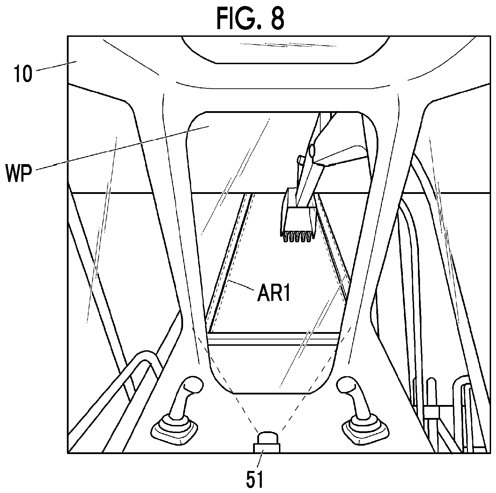

Fig. 8 show a display form in which an image is projected by a projection device 51 onto an inner surface of a window glass WP serving as a transparent panel of the front window of the cabin 10 to display the projection image as the augmented image AR1 of the existing structure or the like.

In this configuration, since the augmented image AR1 is superimposed on a field of view itself from the front window of the cabin 10, the display processing unit 33 does not generate the real image data of the field of view of the excavator 100 from the viewpoint E1.

In addition, the display processing unit 33 converts the augmented image of the existing structure or the like viewed from the viewpoint E1 into an image in a state of being projected onto the inner surface of the window glass WP, and further converts the image displayed on the window glass WP into an image with a viewpoint of the projection device 51. In this manner, the display processing unit 33 generates projection image data.

In this manner, the projection image based on the projection image data is projected onto the inner surface of the window glass WP from the projection device 51, so that the augmented image AR1 of the existing structure or the like can be displayed through the window glass WP while being superimposed on an image of the field of view viewed through the front window from the viewpoint E1 by the operator in the cabin 10.

According to the configuration of the above-described display form, the operator in the cabin 10 can visually recognize the augmented image AR1 of the existing structure or the like within the range of the field of view viewed from the front window without viewing the image display device 50.

### [Other Display Form of Augmented Image (2)]

The display device for an excavator may be applied to a remote control system 1000 for an excavator.

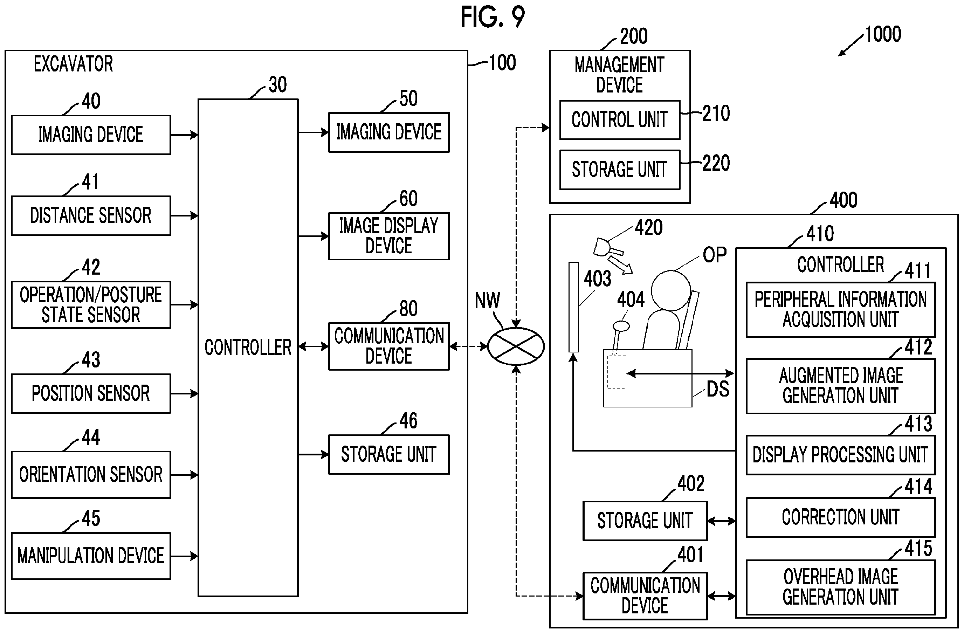

Fig. 9 is a block diagram showing a schematic configuration of the remote control system 1000 for an excavator including the excavator 100 and a remote control device 400.

The remote control device 400 is disposed at a position geographically away from the excavator 100.

The remote control device 400 includes a driver's seat DS on which an operator OP sits, a manipulation device 404 that performs control of the excavator 100 and other manipulation, and an image display device 403 that displays a real image which is an image of the field of view from the cabin 10.

Further, the remote control device 400 includes a controller 410 that performs various types of processing, a storage unit 402, and a communication device 401.

The manipulation device 404 has the same configuration as the manipulation device 45 of the excavator 100, and is a manipulation unit that manipulates each hydraulic actuator that drives each operating element of the excavator 100.

The image display device 403 is a liquid crystal display or an organic EL display that is provided on a front side of the driver's seat DS and displays various images under control of the controller 410.

The storage unit 402 is a storage unit such as a nonvolatile memory, an HDD, an SSD, or the like that stores information such as various types of data in a writable and readable manner.

The communication device 401 is a communication device that transmits and receives various types of information to and from the management device 200, which is the remote external device, the excavator 100, or the like through the predetermined communication network NW, based on a predetermined wireless communication standard.

The controller 410 is a control device that controls the operation of each part of the excavator 100 through the controller 30 of the excavator 100 to control the drive of the excavator 100. For example, the controller 410 is mainly configured of a microcomputer including a CPU, a RAM, a ROM, an I/O, and the like, and in addition to these, may be configured by including, for example, an FPGA or an ASIC.

In addition, the controller 410 includes a peripheral information acquisition unit 411, an augmented image generation unit 412, a display processing unit 413, a correction unit 414, and an overhead image generation unit 415 as functional blocks. These functional configurations are realized by the controller 410 executing various programs, but may be realized by hardware. These functional configurations will be described later.

The display device for a work machine applied to the remote control system 1000 is configured by the position sensor 43, the peripheral information acquisition unit 411, the augmented image generation unit 412, the display processing unit 413, the correction unit 414, and the overhead image generation unit 415 of the excavator 100 and the image display device 403 described above.

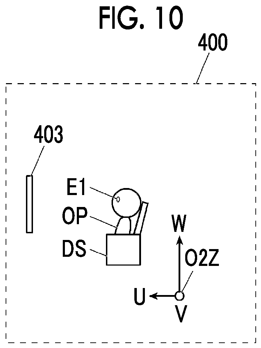

Fig. 10 is an explanatory diagram showing a remote control coordinate system in which a predetermined position in the remote control device 400 is set as an origin O2.

The remote control coordinate system is a three-dimensional UVW perpendicular coordinate system, and includes a U-axis extending parallel to a front-rear direction of the driver's seat DS, a V-axis extending parallel to a right-left direction of the driver's seat DS, and a W-axis perpendicular to the U-axis and the V-axis.

The X-axis of the excavator coordinate system corresponds to the U-axis of the remote control coordinate system, the Y-axis corresponds to the V-axis of the remote control coordinate system, and the Z-axis corresponds to the W-axis of the remote control coordinate system.

In the present embodiment, each three-dimensional coordinate in the remote control coordinate system is associated with one of the three-dimensional coordinates in the excavator coordinate system in advance. Therefore, when the three-dimensional coordinates of the viewpoint E1, which is a position of eyes of the operator OP in the remote control device 400, in the remote control coordinate system are determined, the three-dimensional coordinates of the viewpoint E1 in the excavator coordinate system are uniquely determined. For the position of the viewpoint E1 of the operator OP, the positions of the left eye and the right eye of the operator OP sitting in the driver's seat DS may be detected by imaging of a camera to obtain the viewpoint E1 from the midpoint therebetween.

Next, the contents of the functions of each of the functional configurations of the controller 410 described above will be described in detail.

The peripheral information acquisition unit 411 acquires the current position information of the excavator 100 through the communication device 401.

For the other aspects, the peripheral information acquisition unit 411 executes the same processing as that of the peripheral information acquisition unit 31 of the excavator 100 described above.

In this manner, the peripheral information acquisition unit 411 acquires the peripheral information around the current position of the excavator 100.

The augmented image generation unit 412 executes the same processing as the augmented image generation unit 32 of the excavator 100 described above.

In this manner, the augmented image generation unit 412 generates the augmented image data of the augmented image of the default structure or the like viewed from the viewpoint E1 of the excavator 100.

The display processing unit 413 executes the same processing as the display processing unit 33 of the excavator 100 described above.

In this manner, an image obtained by superimposing the augmented image of the existing structure or the like generated by the augmented image generation unit 412 on the real image of the field of view of the excavator 100 from the viewpoint E1 (refer to the display screen G1 of Fig. 4) can be displayed on the image display device 403.

In addition, also in a case of the display processing unit 413, the name of each part of the existing structure or the like, the distance information DT between a part (the bucket 6 or the like) of the excavator 100 and the existing structure or the like, and the like may be displayed as a part of the augmented image AR1.

The correction unit 414 executes the same processing as the correction unit 34 of the excavator 100 described above.

In this manner, in a case where an error occurs at the display position of the augmented image AR1, the correction unit 414 can display the augmented image AR1 on the image display device 403 by correcting the error so that the display position is an appropriate position.

The overhead image generation unit 415 executes the same processing as the overhead image generation unit 35 of the excavator 100 described above.

In this manner, the overhead image generation unit 415 can display the image obtained by superimposing the real image R2 converted from the real image data of the overhead image into the overhead image with the augmented image AR2 from the augmented image data of the overhead image (refer to the display screen G2 in Fig. 6) on the image display device 403.

In this way, even in a case where the display device for an excavator is applied to the remote control system 1000 of the excavator 100, the augmented image AR1 of the existing structure or the like can be displayed on the image display device 403 of the remote control device 400 while being superimposed on the real image R1 of the field of view from the viewpoint E1 of the cabin 10 of the excavator 100.

For this reason, even in a case of performing the control from a place remote from the excavator 100, it is possible to control the excavator 100 while viewing the real image R1 of the field of view from the viewpoint E1 of the cabin 10.

Further, even in a case where the existing structure or the like is in a state of poor visual recognizability or a state of being not visually recognizable because of an external factor, the existing structure or the like in a state of poor visual recognizability or a state of being not visually recognizable can be recognized with the augmented image AR1.

For this reason, by mounting the display device, it is possible to appropriately operate the excavator 100, which is remotely controlled, in consideration of further safety.

In addition, the remote control system 1000 also includes a configuration for the operator OP to board the cabin 10 of the excavator 100 and to perform the control. However, in a case where the control of the excavator 100 is exclusively performed from the remote control device 400, the cabin 10, the manipulation device 45, and the image display device 50 may be excluded from the configuration of the excavator 100.

In addition, the controller 30 of the excavator 100 and the controller 410 of the remote control device 400 have the peripheral information acquisition units 31 and 411, the augmented image generation units 32 and 412, the display processing units 33 and 413, the correction units 34 and 414, and the overhead image generation units 35 and 415, which are common functional configurations.

These functional configurations may be a configuration which only one of the controllers 30 and 410 includes.

In addition, a configuration in which the controller 30 implements a part of the five functional configurations and the controller 410 implements the remaining part may be adopted.

In addition, in the remote control device 400, as shown in Fig. 9, a head mount display 420 as an image display device that can be worn by the operator OP may be used instead of the image display device 403.

The head mount display 420 is configured to transmit and receive various types of information to and from the controller 410 through wired or wireless communication.

The head mount display 420 may be a see-through type or a non-see-through type. In addition, the head mount display 420 may be a monocular type or a binocular type.

In a case where the head mount display 420 is used, the viewpoint E1, which is the position of the eyes of the operator OP in the remote control coordinate system may be determined as a fixed point.

In addition, a position sensor such as a GNSS receiver may be provided at both the head mount display 420 and a predetermined fixed position of the remote control device 400 that is not movable. In that case, it is possible to acquire the position coordinates of the head mount display 420 in the remote control coordinate system, and the position of the head mount display 420 can be determined at the viewpoint E1 of the operator OP in the remote control coordinate system.

In addition, a configuration in which a head mount display 420 is equipped with an orientation sensor such as a geomagnetic sensor and a direction of a visual line of the operator OP can be detected may be adopted.

The head mount display 420 can display the augmented image AR1 of the existing structure or the like while superimposing the augmented image AR1 on the real image R1 of the field of view from the viewpoint E1 of the cabin 10.

Then, in a case where the orientation sensor is mounted, processing of moving the display range of the real image R1 and the augmented image AR1 in accordance with the detected direction of the visual line of the operator OP is performed, so that the operator OP can view an image of a desired direction by turning a face in the desired direction.

### [Other]

The embodiments according to the present invention have been described above. However, the present invention is not limited to the above-described embodiments and modification examples of the embodiments.

For example, a configuration in which the excavator 100 acquires the peripheral information from the management device 200 has been described, but the present invention is not limited thereto. For example, the peripheral information is prepared in advance in the storage unit 46 of the excavator 100. In addition, a configuration in which the peripheral information acquisition unit 31 reads the peripheral information of the excavator 100 from the storage unit 46 may be adopted.

In that case, the excavator 100 may be configured not to have the communication device 80. In addition, the management device 200 may not be prepared.

In addition, the peripheral information may not be prepared for all of a work destination of the excavator 100 and a movement route thereof.

For example, the peripheral information acquisition unit 31 may be configured to acquire only the peripheral information at a predetermined position of the excavator 100. In that case, a configuration in which the augmented image generation unit 32 generates the augmented image data and the display processing unit 33 displays the augmented image only in a case where the peripheral information is acquired may be adopted.

In the above-described embodiment, the curb is given as a specific example of the existing structure, the terrain, or the boundary of a zone, but it is obvious that the present invention is not limited thereto.

That is, an underground buried object, a guardrail, a road sign, a pedestrian crossing, an electric pole, or a transmission tower as the existing structure, a slope, an inclined surface, a cliff, an embankment, a waterway, a river, a lake, a farm, or a forest as the default terrain, a boundary between a road and land other than the road, a boundary according to a type of land, a boundary according to the type of the above-mentioned terrain, a boundary between a road and a facility, a boundary between facilities, or a boundary between lands having different ownerships as the default boundary of a zone may be displayed as the augmented image.

Among these, for the three-dimensional object, a simplified augmented image may be displayed. In addition, the non-three-dimensional terrain, the boundary of a zone, and the like may be displayed as an augmented image that is a line drawing of a boundary line of a range thereof.

Even in a case where the above-described existing structure or the like is displayed as the augmented image, it is possible to aim to prevent or suppress damage or destruction caused by the contact with the excavator 100 or the like. In addition, it is possible to prevent or suppress an entry into a location where an entry of the excavator 100 is desired to be avoided.

Further, in a case where the augmented image of the underground buried object is displayed, the buried object that is always visually unrecognizable can be visually recognized. In this case, it is possible to aim to prevent or suppress an entry into a location where an entry of the excavator 100 into a location where an underground buried object is buried is desired to be avoided. In addition, in a case where work on an underground buried object is a purpose, the underground buried object can be visually recognized, so that it is possible to aim to improve the workability of the excavator 100.

In addition, a configuration in which the peripheral information includes information on a notification recipient or a contact point (telephone number or the like) for a time of occurrence of an accident such as damage of or entry into the existing structure included in the peripheral information.

In that case, the display processing units 33 and 413 may perform the display of the augmented image by including the information on a contact point.

Further, a work machine according to the present invention is not limited to an excavator, and can be applied to all work machines (including a construction machine). For example, the display device of the work machine according to the present invention can also be applied to a wheel loader, a bulldozer, a motor grader, a skid steer loader, a compact truck loader, a self-propelled crane, or the like.

In addition, changes can be made as appropriate to the detailed parts shown in the embodiment within a range not departing from the concept of the invention.

### Brief Description of the Reference Symbols

1: lower traveling body
2: turning mechanism
3: rotating platform
4: boom
5: arm
6: bucket
10: cabin
11: attachment
30, 410: controller
31, 411: peripheral information acquisition unit
32, 412: augmented image generation unit
33, 413: display processing unit
34, 414: correction unit
35, 415: overhead image generation unit
40: imaging device
43: position sensor (position information acquisition unit)
44: orientation sensor
45: manipulation device
46: storage unit
50, 403: image display device
51: projection device
100: excavator (work machine)
400: remote control device
404: manipulation device
410: controller
420: head mount display (image display device)
1000: remote control system
AR1, AR2: augmented image
DS: driver's seat
DT: distance information
E1: viewpoint
G1, G2: display screen
MD: soil and sand
NW: network
OP: operator
R1, R2: real image
TG1: tag

## Claims

1. A display device for a work machine, comprising:
a position information acquisition unit (43) configured to acquire position information of a work machine (100);
a peripheral information acquisition unit (31, 411) configured to acquire peripheral information indicating an existing structure, terrain, or a boundary of a zone around a position indicated by the position information of the work machine (100);
an augmented image generation unit (32, 412) configured to generate an augmented image (AR1, AR2) in which the existing structure, the terrain, or the boundary of a zone is viewed from a predetermined viewpoint (E1) of the work machine (100); and
a display processing unit (33, 413) configured to display the augmented image (AR1, AR2) of the existing structure, the terrain, or the boundary of a zone while superimposing the augmented image (AR1, AR2) on a field of view from the predetermined viewpoint (E1) of the work machine (100) or on an image (R1, R2) of the field of view.

2. The display device for a work machine according to claim 1,
wherein the display processing unit (33, 413) displays a name of the existing structure, the terrain, or the boundary of a zone in addition to the augmented image (AR1, AR2) .

3. The display device for a work machine according to claim 1, further comprising:
a projection device (51) configured to perform image display on a transparent panel of a window of a driver's seat of the work machine (100),
wherein the display processing unit (33, 413) displays the augmented image (AR1, AR2) on the transparent panel of the window of the driver's seat of the work machine through the projection device (51).

4. The display device for a work machine according to claim 1, further comprising:
an image display device (50, 403, 420) configured to display the image (R1, R2) of the field of view from the predetermined viewpoint (E1) of the work machine (100),
wherein the display processing unit (33, 413) displays the augmented image (AR1, AR2) on the image display device (50, 403, 420) in an overlapping manner on the image (R1, R2) of the field of view.

5. The display device for a work machine according to claim 4,
wherein the image (R1, R2) of the field of view is an overhead image of the work machine (100).

6. The display device for a work machine according to claim 4,
wherein the image display device (50, 403, 420) is an image display device for remote control of the work machine (100) .

7. A work machine comprising:
the display device for a work machine according to any one of claims 1 to 5.
